# EUROPÄISCHE PATENTSCHRIFT

(11) **EP 0 997 367 B1**
(45) Veröffentlichungstag und Bekanntmachung des Hinweises auf die Patenterteilung: **06.10.2004**
(21) Anmeldenummer: 99115372.7
(22) Anmeldetag: 04.08.1999
(51) Int. Cl.: B62B 7/06

(54) **Fahrgestell für einen Kinder- oder Puppenwagen**
Frame for child's or doll's prams
Chassis de poussette pour enfants ou poupées

(30) Priorität: 28.10.1998 DE 29819218 U
(43) Veröffentlichungstag der Anmeldung: 03.05.2000
(73) Patentinhaber: Firma Joh. Georg Hartan, 96242 Sonnefeld-Gestungshausen (DE)
(72) Erfinder: Hartan, Rolf, 96242 Sonnefeld (DE)
(74) Vertreter: Matschkur, Lindner Blaumeier Patent- und Rechtsanwälte

(56) Entgegenhaltungen:
- EP-A- 0 301 828
- GB-A- 2 319 227
- US-A- 3 653 681
- US-A- 4 832 361
- US-A- 4 848 787
- US-A- 5 205 579

## Beschreibung

Die Erfindung betrifft ein Fahrgestell für einen Kinder- oder Puppenwagen, mit einem Fahrwerk in Verbindung mit zwei zusammenklappbaren Scheren, wobei an einem Ende eines der gleichlaufenden Schenkel der Scheren ein Schieber angeordnet ist, dem ein Rastelement zugeordnet ist, das in der Schiebestellung in einer Rastaufnahme verrastbar und zum Zusammenlegen des Fahrgestells lösbar ist.

Solche Fahrgestelle sind bekannt und erfreuen sich zumeist als Kinderwagen in Form eines Sportwagens großer Beliebtheit. Die Zusammenlegbarkeit des Fahrgestells ermöglicht es, den Kinderwagen auch bei geringem Platzangebot problemlos transportieren zu können. Zum Zusammenlegen sind in der Regel an den beiden Längsholmen des wesentlichen U-förmigen Schiebers zwei griffartige Schiebestücke vorgesehen, die mit einem Rastzapfen, der an einer entsprechenden Rastaufnahme im Bereich der Scheren eingerastet ist, wenn sich der Schieber in einer Schiebestellung befindet, bewegungsgekoppelt sind, so daß dieser Rastzapfen beim Anziehen der Schiebestücke gelöst wird und der Schieber und die Scheren quasi in sich zusammenfallen können. Nachteilig bei dieser Art der Ausführung der Schiebestücke ist es jedoch, daß beispielsweise dann, wenn der Kinderwagen mit darin sitzendem Kind in einem Bus oder dgl. gehoben wird, diese Schiebestücke unbeabsichtigt beim Anheben betätigt werden können, was dazu führt, daß der Rastzapfen gelöst wird und das Fahrgestell quasi nach unten abklappen kann. Wenngleich in der Regel eine Falle vorgesehen ist, die die Abklappbewegung begrenzt, liegt hierin ein beachtlich hoher Unsicherheitsfaktor, hervorgerufen durch die Möglichkeit, daß eine unbeabsichtigte Betätigung dieser bekannten Schiebestücke ohne weiteres möglich ist.

Aus US-A-5 205 579 ist ein Fahrgestell für einen Kinder- oder Puppenwagen bekannt, das ein Fahrwerk in Verbindung mit zwei zusammenklappbaren Scheren aufweist, wobei an einem Ende eines der gleichlaufenden Schenkel der Scheren ein Schieber angeordnet ist, dem ein Rastelement zugeordnet ist, das in der Schiebestellung in einer Rastaufnahme verrastbar und zum Zusammenlegen lösbar ist. Zum Lösen dieses Rastelements ist im Bereich des Querholms des Schiebers ein um die Holmachse drehbares Drehelement vorgesehen, das mit einem mit dem Rastelement gekoppelten Zugelement in Verbindung steht, welches bei Drehen des Drehelements um die Holmachse unter Mitnahme des Rastelements bewegbar ist. Das Zugelement läuft im hohlen Schieber von dem Drehelement bis zum Rastelement, das im Bereich des unteren, scherenseitigen Schieberendes angeordnet ist.

Der Erfindung liegt damit das Problem zugrunde, ein Fahrgestell anzugeben, bei dem eine unbeabsichtigte Betätigung des Zusammenklappmechanismus weitgehend ausgeschlossen ist bei gleichzeitig gegebener einfacher Handhabung desselben.

Zur Lösung dieses Problems ist bei einem Fahrgestell der eingangs genannten Art erfindungsgemäß vorgesehen, daß zum Lösen im Bereich eines jeden Schieberlängsholmes ein um die Holmlängsachse drehbares Drehelement vorgesehen ist, das mit einem mit dem Rastelement gekoppelten Zugelement in Verbindung steht, welches beim Drehen des Drehelements längs des Längsholms unter Mitnahme des Rastelements bewegbar ist, daß der Schieber umlegbar und in den jeweiligen Endstellungen verrastbar ist, wobei am Schieber Lösemittel zum Lösen der Verrastung vorgesehen sind, umfassend zwei an den Längsholmen vorgesehene, in Holmlängsrichtung schiebbare Schiebeelemente, die jeweils mit einem weiteren Zugelement verbunden sind, welches mit jeweils einem weiteren Rastelement (36) verbunden ist, und daß ein Schiebeelement mit einem Drehelement in einem gemeinsamen Teil kombinert sind, so daß je nach Bedarf das Teil als Dreh- oder als Schiebeelement betätigbar ist.

Die erfindungsgemäße Zusammenlegeeinrichtung sieht mit besonderem Vorteil im Gegensatz zum Stand der Technik ein Drehelement vor, welches um die Holmlängsachse zu drehen ist, um das jeweilige Rastelement zu lösen. Die Erfindung geht also ab von der bisher bekannten Schiebeausführung, die die eingangs genannten Probleme mit sich bringen. Ein Drehen des Drehelements um die Holmlängsachse ist in unbeabsichtiger Weise nicht möglich, da selbst dann, wenn beispielsweise zum Hochheben des Kinderwagens unmittelbar am Drehelement angegriffen wird, dieses allerhöchstens auf Zug beansprucht ist. Da weiterhin zwei entsprechende Drehelemente vorgesehen sind, die bevorzugt gegensinnig zu bewegen sind, ist mit besonderem Vorteil ein unbeabsichtigtes Lösen ausgeschlossen, die Handhabung bleibt aber Hinblick auf die Einfachheit der vorzunehmenden Bewegung nach wie vor problemlos.

Wie beschrieben muß zur Bewegung des Rastelements die Drehbewegung des Drehelements in eine Längsbewegung des Zugelements umgewandelt werden. Hierzu kann erfindungsgemäß das Drehelement eine Wendel umfassen, auf welcher beim Drehen eine, vorzugsweise zwei mit dem Zugelement verbundene Walzen laufen, wobei zu diesem Zweck am Ende des im Inneren des Längsholmes verlaufenden Zugelements ein Querstift vorgesehen ist, der eine längliche Durchbrechung des Längsholms durchsetzt und an dessen Enden, also außerhalb des Holmes liegend, die Walzen vorgesehen sind. Wird die insoweit lagefeste Wendel bewegt, laufen die Walzen auf der ansteigenden Führungsfläche der Wendel, was dazu führt, daß das Zugelement angezogen und das Rastelement entsprechend gelöst wird. Um ein automatisches Einschnappen der Rastelemente zu ermöglichen, wie auch um das Drehelement stets in seine Ausgangsstellung zu führen, können erfindungsgemäß die Rastelemente und/oder das Drehelement gegen eine von einem Federelement erzeugte Rückstellkraft bewegbar sein. Zur einfachen Handhabung kann das Drehelement als ein den Längsholm umgebender Drehgriff ausgebildet sein, oder ein drehgriffartiges Teil, das mit der Wendel zusammenwirkt, umfassen. Zur Ermöglichung einer einfachen Bewegungskopplung zwischen der hülsenartigen, vom Längsholm durchsetzten Wendel und dem drehgriffartigen Teil des Drehelements kann die Wendel eine in Holmlängsrichtung verlaufende Außenverzahnung und das drehgriffartige Teil eine entsprechende Innenverzahnung aufweisen, so daß bei Betätigung des drehgriffartigen Teils die Wendel über den Verzahnungseingriff mitnehmbar ist. Dabei sollte der Drehwinkel des Drehelements oder des drehgriffartigen Teils ca. 90° betragen, um eine einfache Handhabung zu gewährleisten. Daneben ist es auch denkbar, anstelle einer mehrteiligen Ausführung des Drehelements eine entsprechende Wendel unmittelbar am Drehgriff auszubilden.

Zur Ermöglichung eines beliebigen Wechsels der Fahrrichtung, also mit nach vorne oder nach hinten blickendem Kind, kann erfindungsgemäß der Schieber umlegbar und in den jeweiligen Endstellungen verrastbar sein, wobei am Schieber Lösemittel zum Lösen der Verrastung vorgesehen sind, umfassend zwei an den Längsholmen vorgesehene, in Holmlängsrichtung schiebbare Schiebeelemente, die jeweils mit einem weiteren Zugelement verbunden sind, welches mit jeweils einem weiteren Rastelement verbunden ist. Um auch hier aus sicherheitstechnischen Gründen ein unbeabsichtigtes Betätigen der Schiebeelemente zu vermeiden, kann erfindungsgemäß jedem Schiebeelement eine Sperreinrichtung zugeordnet sein, welche das Schiebeelement sperrt und zur Bewegung desselben zu betätigen ist. Eine Betätigung der Schiebeelemente ist also nur dann möglich, wenn zuvor oder gleichzeitig die jeweilige Sperreinrichtung gelöst wird. Diese Sperreinrichtung kann erfindungsgemäß einen Löseknopf umfassen, mittels dem ein im Inneren des Längsholms gegen eine vorzugsweise von einer Blattfeder erzeugte Rückstellkraft gelagerter Sperrzapfen, der zum Sperren an der jeweiligen Schiebeeinrichtung angreift, eindrückbar ist, so daß diese dann entsprechend verschoben werden kann. Es sind hier also zwei Handgriffe erforderlich, zum einen das Einrücken des Löseknopfes, zum anderen das Verschieben der Schiebeelemente, so daß ein unbeabsichtigtes Lösen auch hier ausgeschlossen und ein plötzliches Abklappen des Wagens samt Kind z.B. während des Verhebens des Kinderwagens, was zu erheblichen Verletzungen führen kann, vermieden ist.

Gemäß der Erfindung ist ein Schiebeelement mit einem Drehelement in einem gemeinsamen Teil kombiniert, so daß je nach Bedarf das Teil als Dreh- oder als Schiebeelement betätigbar ist. Das kombinierte Teil kann erfindungsgemäß als ein den Längsholm umgebender Dreh-Schiebegriff ausgebildet sein. Der Löseknopf ist in diesem Fall an dem gemeinsamen Teil angeordnet. Dieses bildet dann quasi eine komplette Betätigungseinheit mittels welcher sämtliche Veränderungsbewegungen des Fahrgestells einleitbar sind. Kommt ein kombiniertes, gemeinsames Teil zum Einsatz, kann erfindungsgemäß die Wendel eine oder zwei Wandausnehmungen zur Aufnahme der bei Betätigung des Schiebeelements feststehenden Walzen aufweisen, da die Wendel, die Teil des Drehelements ist, beim Verschieben des Schiebeelements mitgenommen wird, die Walzen jedoch lagefest bleiben. Der Schieber selbst kann an den Scherenschenkeln mittels Befestigungsstreben angeordnet sein, an deren unteren Enden die Längsholme schwenkbar gelagert sind, wobei der Schieber zum Verschwenken von der einen auf die andere Fahrseite um diese Schwenklager geschwenkt wird, und wobei an den Befestigungsstreben die Rastelemente vorgesehen sind, die zum Verrasten des Schiebers beim Aufstellen des Fahrgestells einzurasten sind. Diese Rastelemente sind mit den an den Längsholmen vorgesehenen Zugelementen lösbar koppelbar, das heißt, die Bewegungskopplung wird dann, wenn der Schieber zum Schieben von der anderen Seite herumgeschwenkt wird, gelöst, zum Zusammenlegen ist der Schieber dann wieder auf die erste Seite zu schwenken, wobei dann die Rastelemente wieder mit den Zugelementen gekoppelt werden, so daß sie mittels des Drehelements wieder betätigbar sind. Ein Zusammenlegen ist also nur von dieser Seite möglich.

Zum Verrasten des Schiebers in den jeweiligen Endstellungen, also den jeweiligen Schiebestellungen kann an jedem Längsholm ein Schiebeteil mit zwei an gegenüberliegenden Seiten ausgebildeten Rastklauen vorgesehen sein, das mit dem Schiebeelement über das außerhalb des Längsholms verlaufende Zugelement längs des Holmes bewegbar ist, wobei ferner im Bereich der Schenkelenden der Scheren bzw. der Befestigungsstreben entsprechende Rastaufnahmen vorgesehen sind. Die weiteren Rastelemente selbst können gegen eine von einem Federelement erzeugte Rückstellkraft aus der Raststellung bewegbar sein, was dazu führt, daß diese automatisch beim Umschwenken verrasten, da das Federelement die Rastelemente stets in die Raststellung drängt.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine perspektivische Ansicht eines erfindungsgemäßen Kinderwagens,
- Fig. 2: eine Schnittansicht eines erfindungsgemäßen kombinierten Teiles, an dem ein Drehelement und ein Schiebeelement kombiniert sind,
- Fig. 3: eine Teilschnittansicht des an einem Längsholm befestigten Teils aus Fig. 2,
- Fig. 4: eine Schnittansicht in Richtung der Linie IV, IV in Fig. 3,
- Fig. 5: eine Ansicht der hülsenartigen Wendel,
- Fig. 6: eine Ansicht entsprechend Fig. 3 mit um 90° gedrehtem Drehelement,
- Fig. 7: eine Seitenansicht eines Längsholms in aufgebauter Fahrgestellstellung,
- Fig. 8: eine Ansicht gemäß Fig. 7 mit ausgerücktem Rastelement,
- Fig. 9: das Fahrgestell im zusammengelegten Zustand,
- Fig. 10: eine Schnittansicht entsprechend Fig. 3 mit betätigtem Schiebeelement zum Lösen der weiteren Rastelemente,
- Fig. 11: eine Seitenansicht eines Längsholms mit in Raststellung befindlichem weiteren Rastelement,
- Fig. 12: eine Ansicht entsprechend Fig. 11 mit gelöstem Rastelement, und
- Fig. 13: eine Seitenansicht eines Kinderwagens mit umgelegtem Schieber.

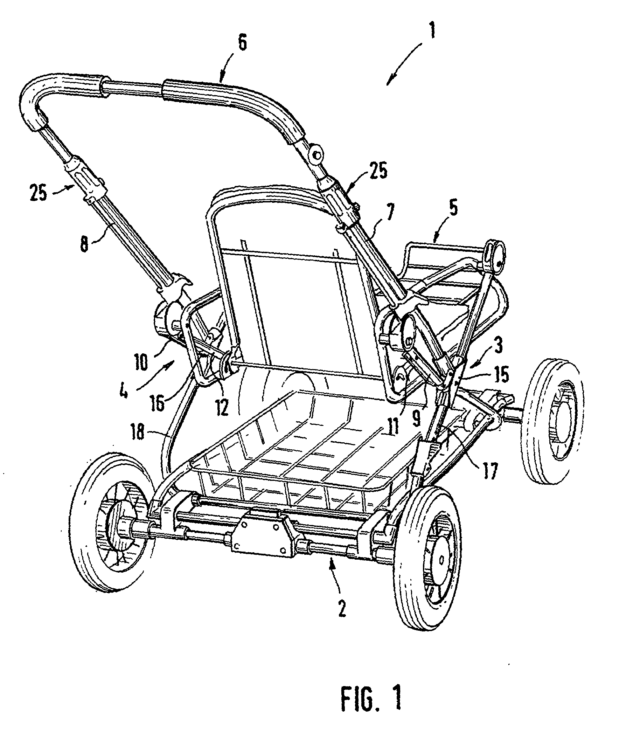

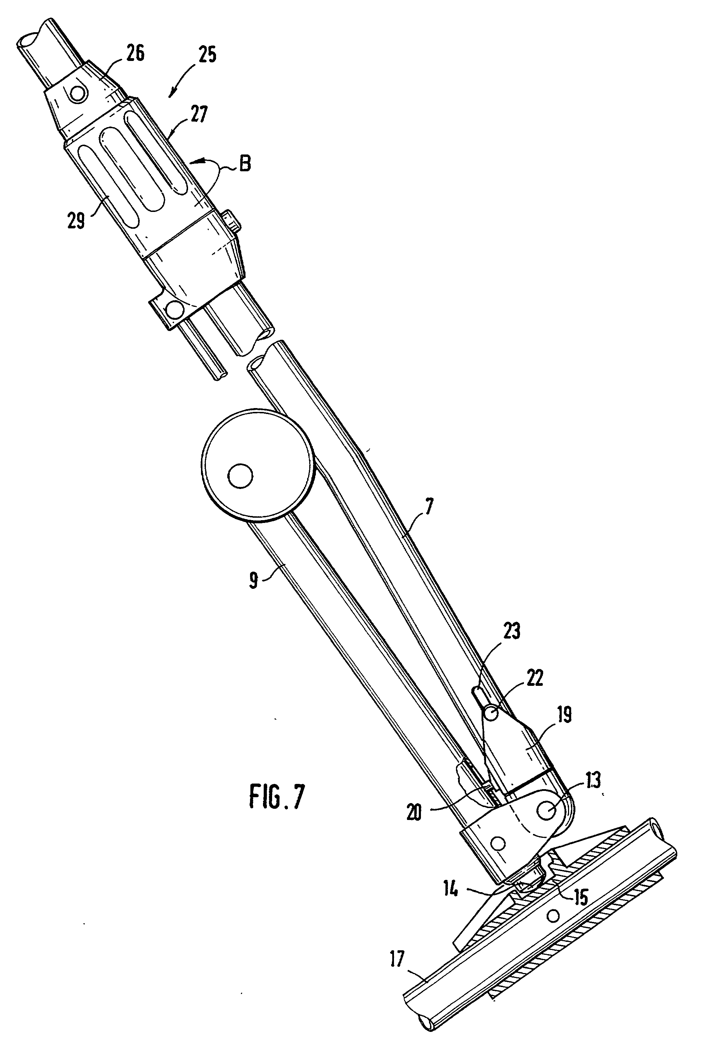

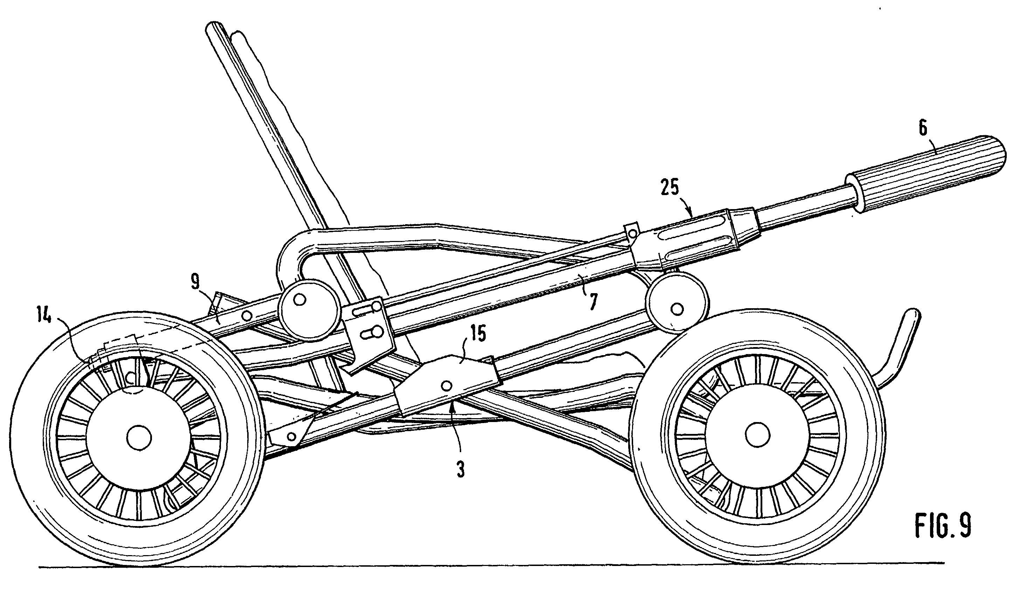

Fig. 1 zeigt einen erfindungsgemäßen Kinderwagen 1, bestehend aus einem Fahrgestell 2, auf welches es im vorliegenden insoweit nicht ankommt, weshalb dieses nicht näher beschrieben ist. Mit dem Fahrgestell verbunden sind zwei Scheren 3, 4, die ein Einsatzteil 5 tragen, auf welchem das Kind sitzt. Zum Schieben ist ein Schieber 6 vorgesehen, der im wesentlichen eine U-Form aufweist. Das Fahrgestell kann zusammengelegt werden, wie in Fig. 9 gezeigt, daneben kann der Schieber 6 auch auf die andere Seite geschwenkt werden. Der Schieber 6 selbst weist zwei Längsholme 7, 8 auf, die mittels zweier Befestigungsstreben 9, 10 am Ende eines Schenkels 11, 12 der jeweiligen Scheren 3, 4 angelenkt sind. Jeder Längsholm 7, 8 ist mit der jeweiligen Befestigungsstrebe über eine Gelenkverbindung 13 (siehe Fig. 7) verbunden. Am unteren Ende jeder Befestigungsstrebe 9, 10 ist ein Rastelement 14 in Form eines Rastzapfens angeordnet, welche an einer entsprechenden Rastaufnahme 15, 16, die an einem weiteren Schenkel 17, 18 der Scheren 3, 4 angeordnet ist, aufgenommen. Hierdurch wird das Fahrgestell in der aufgestellten Form arretiert und gehalten.

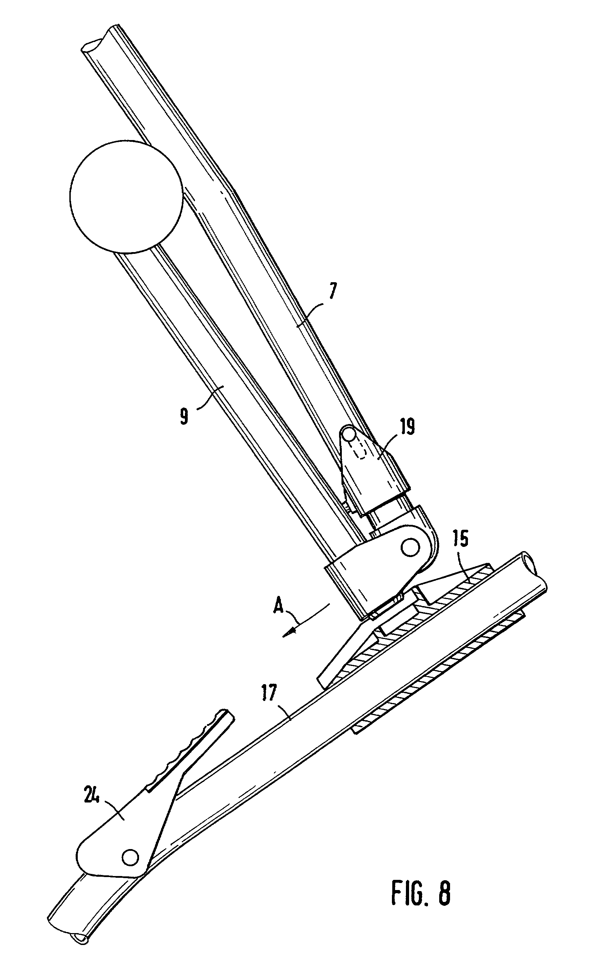

Unter Bezugnahme auf Fig. 7 wird die Bewegungskopplung eines Rastelements näher erläutert. Das Rastelement 14 ist mit einem am Längsholm 7 angeordneten hülsenartigen Kopplungsteil 19 lösbar mittels eines am Kopplungsteil 19 angreifenden Kopplungszapfens 20, welcher mit dem Rastzapfen 14 verbunden ist und aus der Befestigungsstrebe hervorsteht, verbunden. Das Kopplungsteil 19 wiederum ist mit einem im Inneren des Längsholms 7 verlaufenden Zugelement 21 in Form einer Zugstange über eine entsprechende Bolzenverbindung 22 verbunden. Die Zugstange wiederum kann mittels eines nachfolgend noch beschriebenen Bewegungsmechanismus im Inneren des Längsholms 7 bewegt werden, so daß das Kopplungsteil 19 längs des Holmes 7 bewegbar ist (der Bolzen 22 wandert dann in der Längsdurchbrechung 23), wodurch dann bei Mitnahme des Zapfens 20 das jeweilige Rastelement eingezogen und aus der Rastaufnahme 15 gelöst werden kann, wie in Fig. 8 gezeigt, so daß die Verrastung aufgehoben wird und, wie durch den Pfeil A in Fig. 8 dargestellt ist, der Schieber nach unten fallen kann, wobei die Bewegung durch eine Falle 24, die separat beispielsweise mit dem Fuß gelöst werden muß, um das Gestell gänzlich zusammenzulegen, gebremst wird.

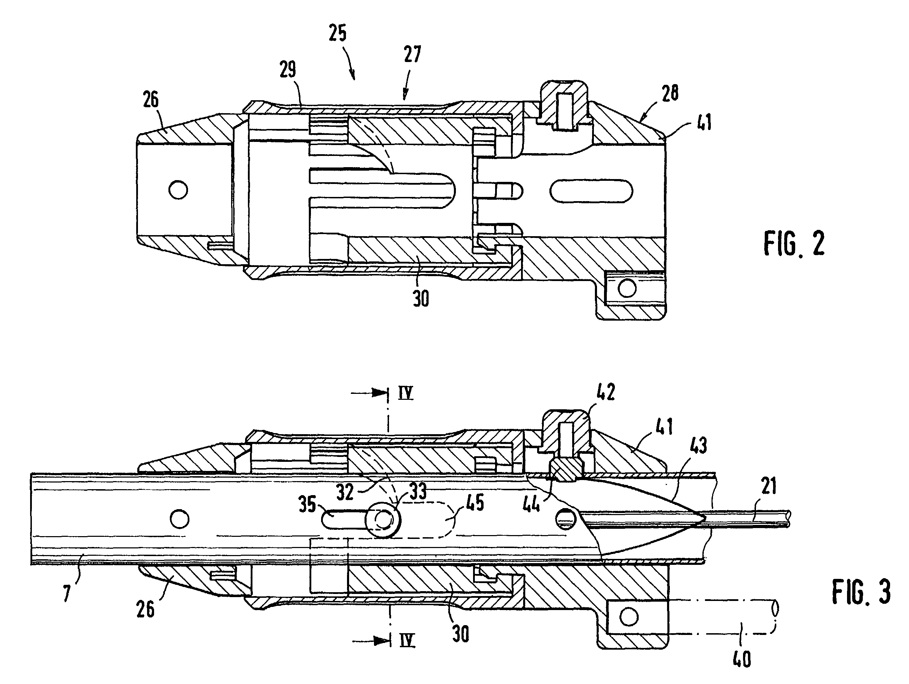

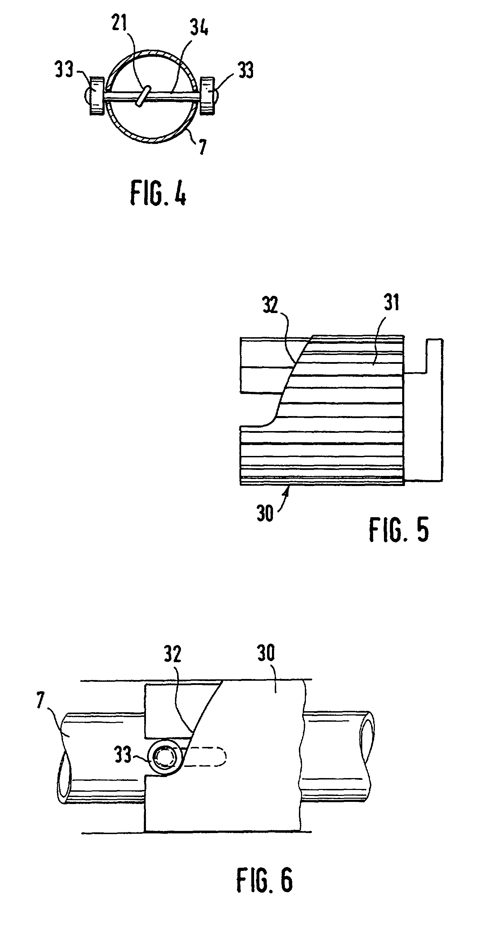

Der Mechanismus zum Lösen des Rastelements ist im Detail in den Fig. 2 bis 6 beschrieben. Fig. 2 zeigt ein gemeinsames Teil 25, welches am jeweiligen Längsholm angeordnet ist. Hierzu ist am Teil 25 ein Befestigungsabschnitt 26 ausgebildet, welcher mittels einer Bolzenverbindung am Holm angebracht wird. Am gemeinsamen Teil 25 ist ein Drehelement 27 realisiert, welches zum Bewegen der Rastelemente dient, sowie ein Schiebeelement 28, welches zum Bewegen weiterer Rastelemente zu betätigen ist, um den Schieber 6 von der einen auf die andere Seite umlegen zu können, was nachfolgend noch beschrieben wird. Das Teil 25, das, siehe Fig. 3, griffartig den Holm 7 umgibt, weist ein griffartiges Teil 29 auf, welches zum Bewegen einer im Inneren angeordneten Wendel 30 dient. Diese Wendel 30, die mit einer Außenverzahnung 31 versehen ist, die mit einer entsprechenden Innenverzahnung des griffartigen Teils 29 kämmt, ist um die Holmlängsachse drehbar und weist zwei wendelartig steigende Führungsflächen 32 auf. Auf diesen Führungsflächen laufen zwei Walzen 33 (siehe Fig. 4), die drehbar an einem Querstift 34 angeordnet sind, der mit der Zugstange 21 verbunden ist, und der, siehe Fig. 7, eine entsprechende Längsdurchbrechung 35 am Holm 7 durchsetzt. Wird nun, ausgehend von der in Fig. 3 gezeigten Ausgangsstellung, das griffartige Teil 29 um 90° verdreht, so wird automatisch die Wendel 30 gedreht, was dazu führt, daß die Walzen auf die Führungsfläche 32 "nach oben" laufen, was gleichzeitig bedeutet, daß das Zugelement 21 angezogen wird, was wiederum infolge der Bewegungskopplung zum Einziehen des Rastelements 14 führt.

Auf diese Weise wird dieses aus seinem Rasteingriff gelöst. Wird das griffartige Teil 29 losgelassen, so wird es bedingt durch die Rückstellkraft einer nicht näher gezeigten Torsionsfeder wieder in die in Fig. 3 gezeigte Ausgangsstellung zurückgeführt, was dazu führt, daß auch der Rastzapfen 14 wieder austritt. Zum Zusammenlegen ist also eine Drehbewegung erforderlich, die ein unbeabsichtigtes Betätigen dieses Lösemechanismus ausschließt. Die Drehrichtung der griffartigen Teile 29 der beiden Holme 7, 8 ist zweckmäßigerweise gegengleich, beide sind beispielsweise zum Lösen um ca. 90° nach innen zu verdrehen.

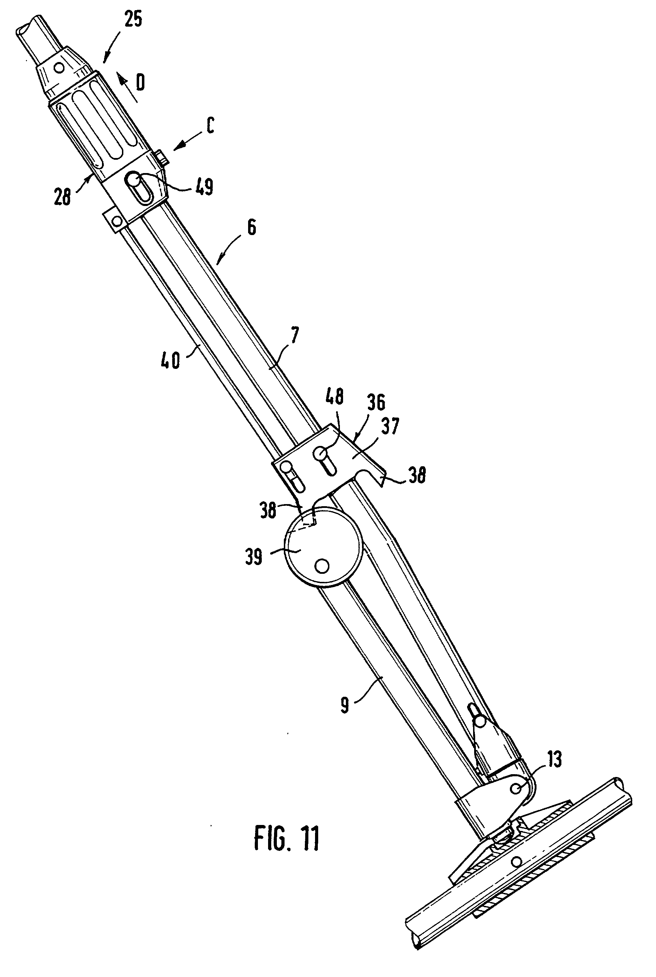

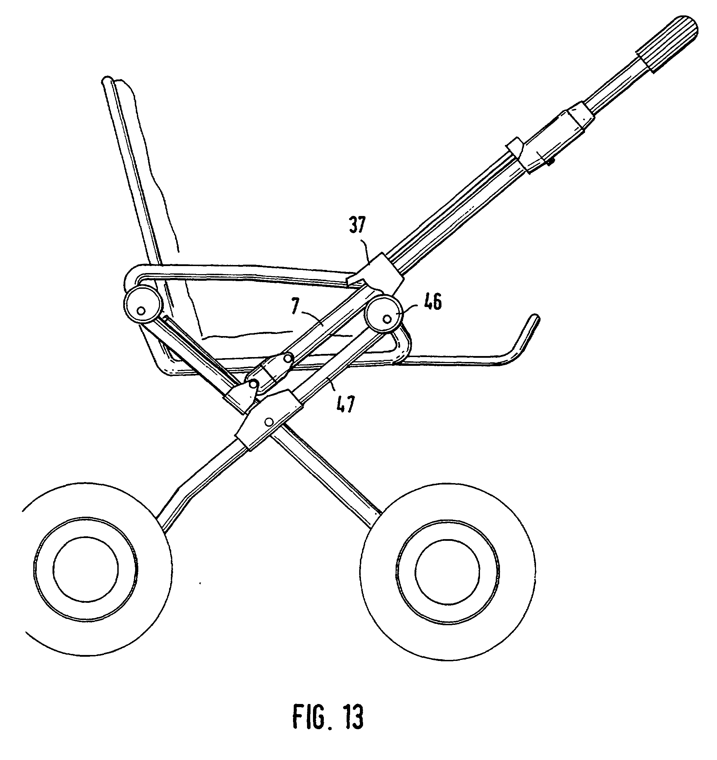

Wie die Fig. 11 bis 13 zeigen ist es darüber hinaus möglich, den Schieber 6 auch auf die andere Seite umzulegen, was durch Herumschwenken um die Gelenkverbindung 13 erfolgt. Zu diesem Zweck ist, siehe Fig. 11, am Längsholm 7 (gleiches gilt natürlich auch für den Längsholm 8) ein weiteres Rastelement 36 vorgesehen, bestehend aus einem Schiebeteil 37 mit einander gegenüberliegenden Rastklauen 38. Die eine Rastklaue 38 steht in Eingriff mit einer Rastaufnahme 39, die im Bereich des oberen Endes der Befestigungsstrebe 9 ausgebildet ist. Soll nun der Schieber 6 umgelegt werden, ist dieser Rasteingriff zu lösen, wozu das Schiebeteil 7 mittels eines weiteren Zugelements 40 in Form einer Zugstange mit einem Schiebeelement 28 verbunden ist. Dieses Schiebeelement ist ebenfalls am gemeinsamen Teil 25 ausgebildet, das heißt, an diesem ist sowohl das Drehelement als auch das Schiebeelement vorgesehen. Das Schiebeelement 28 umfaßt, siehe die Fig. 2 und 3, ein Schiebestück 41, welches den Holm 7 ebenfalls hülsenartig umgibt. An diesem Schiebestück 41 ist ein Druckknopf 42 vorgesehen, mittels welchem ein im Holminneren gegen die Wirkung einer Blattfeder 43 gelagerter Sperrzapfen 44 nach innen drückbar ist. Dieser Sperrzapfen 44 ist Teil einer Sperreinrichtung, die zum Sperren des Schiebeelements 48 dient, um auf diese Weise ein unbeabsichtigtes Betätigen desselben zu vermeiden.

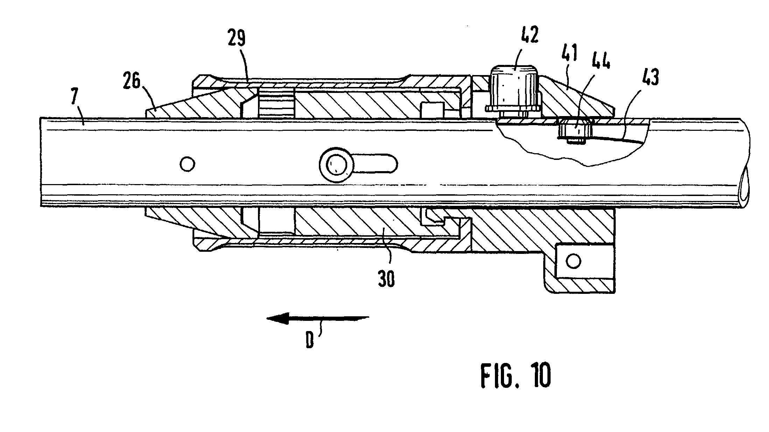

Die Betätigung des Schiebeelements wird, ausgehend von der in Fig. 3 gezeigten Stellung, in Verbindung mit Fig. 10 erläutert. Um das Schiebeelement überhaupt betätigen zu können, ist zunächst der Druckknopf 42 zu drücken, was dazu führt, daß der daran anliegende Sperrzapfen 44 in das Holminnere gedrückt wird, siehe Pfeil C in Fig. 11. Hierdurch wird die Sperre des Schiebeelements 28 aufgehoben, so daß dieses, siehe Pfeil D in Fig. 11 sowie in Fig. 10 längs des Holmes 7 verschoben werden kann. Das Schiebestück 41 wird dabei über den Sperrzapfen 44 hinweggeschoben. Dieser wird dadurch nieder gehalten. Gleichzeitig wird auch das Drehelement 27, also das griffartige Teil 29 und die Wendel 30 mitverschoben. Lediglich das Befestigungsstück 26 verbleibt unbewegt. Während des Verschiebens umgreift die Ausnehmung 45 der Wendel 30 die Walzen 33, die ebenfalls bei Betätigung des Schiebeelements unbewegt bleiben.

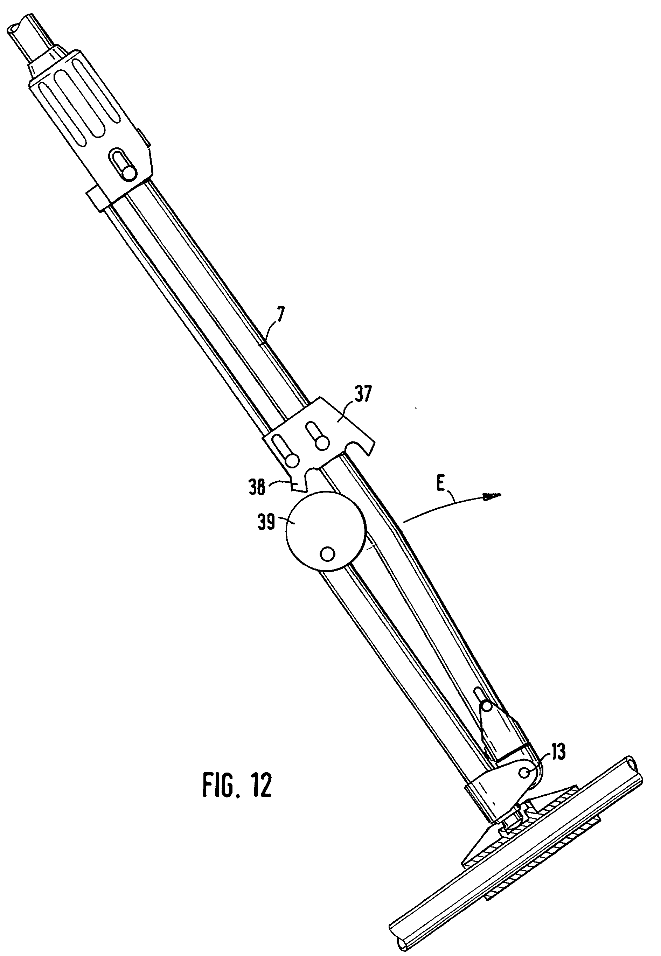

Infolge der Bewegung des Schiebeelements 28 wird das Zugelement 40, das am Schiebeteil 41 befestigt ist, angezogen, was dazu führt, daß auch das Schiebestück 37 bewegt wird, siehe Fig. 12, und die Rastklaue 38 außer Eingriff gebracht wird. Anschließend kann der Schieber 6 um das Drehgelenk 13 geschwenkt werden, siehe Pfeil E in Fig. 12, und auf die gegenüberliegende Gestellseite geworfen werden, wo eine entsprechende Rastaufnahme 46 am Ende eines Scherenholmes 47 vorgesehen ist, in die die andere Rastklaue 38 eingreift. Das Schiebeteil 37 selbst, das am Holm 7 mittels einer Bolzenverbindung 48 gehaltert ist, ist mittels einer nicht gezeigten Feder mit einer Rückstellkraft beauftragt, die das Schiebeteil 37 stets nach unten in Richtung eines Rasteingriffs drängt. Mittels einer Bolzenverbindung 49, die ein Langloch am Schiebestück 41 durchsetzt, ist dieses unverdrehbar gehaltert.

## Patentansprüche

1. Fahrgestell für einen Kinder- oder Puppenwagen, mit einem Fahrwerk in Verbindung mit zwei zusammenklappbaren Scheren, wobei an einem Ende eines der gleichlaufenden Schenkel der Scheren ein Schieber (6) angeordnet ist, dem ein Rastelement zugeordnet ist, das in der Schiebestellung in einer Rastaufnahme verrastbar und zum Zusammenlegen lösbar ist, **dadurch gekennzeichnet,**
- **daß** zum Lösen im Bereich eines jeden Schieberlängsholmes (7, 8) ein um die Holmlängsachse drehbares Drehelement (27) vorgesehen ist, das mit einem mit dem Rastelement (14) gekoppelten Zugelement (21) in Verbindung steht, welches Zugelement (21) bei Drehen des Drehelements (27) längs des Längsholmes (7, 8) unter Mitnahme des Rastelements (14) bewegbar ist,
- **daß** der Schieber (6) umlegbar und in den jeweiligen Endstellungen verrastbar ist, wobei am Schieber Lösemittel zum Lösen der Verrastung vorgesehen sind, umfassend zwei an den Längsholmen (7, 8) vorgesehene, in Holmlängsrichtung schiebbare Schiebeelemente (28), die jeweils mit einem weiteren Zugelement (40) verbunden sind, welches mit jeweils einem weiteren Rastelement (36) verbunden ist, und
- **daß** ein Schiebeelement (28) mit einem Drehelement (27) in einem gemeinsamen Teil (25) kombinert sind, so daß je nach Bedarf das Teil als Dreh- oder als Schiebeelement betätigbar ist.

2. Fahrgestell nach Anspruch 1, **dadurch gekennzeichnet, daß** das Drehelement (27) eine Wendel (30) umfaßt, auf welcher beim Drehen eine, vorzugsweise zwei mit dem Zugelement (21) verbundene Walzen (33) laufen.

3. Fahrgestell nach Anspruch 2, **dadurch gekennzeichnet, daß** am Ende des im Inneren des Längsholmes (7, 8) verlaufenden Zugelements (21) ein Querstift (34) vorgesehen ist, der eine längliche Durchbrechung (35) des Längsholmes (7, 8) durchsetzt, und an dessen Enden die Walzen (33) vorgesehen sind.

4. Fahrgestell nach einem der vorangehenden Ansprüche, **dadurch gekennzeichnet, daß** jedes Rastelement (14) und/oder das Drehelement (27) gegen eine von einem Federelement erzeugte Rückstellkraft bewegbar sind.

5. Fahrgestell nach einem der vorangehenden Ansprüche, **dadurch gekennzeichnet, daß** das Drehelement (27) als ein den Längsholm (7, 8) umgebender Drehgriff ausgebildet ist, oder ein drehgriffartiges Teil (29), das mit der Wendel (30) zusammenwirkt umfaßt.

6. Fahrgestell nach Anspruch 5, **dadurch gekennzeichnet, daß** die hülsenartige, vom Längsholm (7, 8) durchsetzte Wendel (30) eine in Holmlängsrichtung verlaufende Außenverzahnung (31) aufweist, und daß am drehgriffartigen Teil (29) des Drehelements (27) eine entsprechende Innenverzahnung vorgesehen ist, so daß bei Betätigung des drehgriffartigen Teils (29) die Wendel (30) über den Verzahnungseingriff mitnehmbar ist.

7. Fahrgestell nach einem der vorangehenden Ansprüche, **dadurch gekennzeichnet, daß** der Drehwinkel des Drehgriffs oder des drehgriffartigen Teils (29) zum Bewegen des Rastelements ca. 90° beträgt.

8. Fahrgestell nach einem der vorangehenden Ansprüche, **dadurch gekennzeichnet, daß** jedem Schiebeelement ein Sperreinrichtung zugeordnet ist, welche das Schiebeelement (28) sperrt und zur Bewegung desselben zu betätigen ist.

9. Fahrgestell nach Anspruch 8, **dadurch gekennzeichnet, daß** die Sperreinrichtung einen Löseknopf (42) umfaßt, mittels dem ein im Inneren des Längsholms (7, 8) gegen eine vorzugsweise von einer Blattfeder (43) erzeugte Rückstellkraft gelagerter Sperrzapfen (44) eindrückbar ist.

10. Fahrgestell nach einem der vorangehenden Ansprüche, **dadurch gekennzeichnet, daß** das gemeinsame Teil (25) als ein den Längsholm (7, 8) umgebender Dreh-Schiebegriff ausgebildet ist.

11. Fahrgestell nach Anspruch 10, **dadurch gekennzeichnet, daß** der Löseknopf (42) an dem gemeinsamen Teil (25) angeordnet ist.

12. Fahrgestell nach einem der Ansprüche 10 oder 11, **dadurch gekennzeichnet, daß** die Wendel (30) eine oder zwei Wandausnehmungen (45) zur Aufnahme der bei Betätigung des Schiebeelements (28) feststehenden Walzen (33) aufweist.

13. Fahrgestell nach einem der vorangehenden Ansprüche, **dadurch gekennzeichnet, daß** der Schieber (6) an den Scherenschenkeln mittels Befestigungsstreben (9, 10) angeordnet ist, an deren unteren Enden die Längsholme schwenkbar gelagert sind, und die die Rastelemente (14) aufweisen, die mit den an den Längsholmen (7, 8) vorgesehenen Zugelementen (21) lösbar koppelbar sind.

14. Fahrgestell nach einem der vorangehenden Ansprüche, **dadurch gekennzeichnet, daß** die weiteren Rastelemente (36) zum Verrasten des Schiebers (6) in den jeweiligen Endstellungen an jedem Längsholm (7, 8) ein Schiebeteil (37) mit zwei an gegenüberliegenden Seiten ausgebildeten Rastklauen (38) aufweisen, das mit dem Schiebeelement (28) über das außerhalb des Längsholms (7, 8) verlaufende Zugelement (40) längs des Holmes (7, 8) bewegbar ist, und daß im Bereich der Schenkelenden der Scheren (3, 4) bzw. der Befestigungsstreben (9, 10) entsprechende Rastaufnahmen (39, 46) vorgesehen sind.

15. Fahrgestell nach einem der vorangehenden Ansprüche, **dadurch gekennzeichnet, daß** die weiteren Rastelemente (36) gegen eine von einem Federelement erzeugte Rückstellkraft aus der Raststellung bewegbar sind.

## Claims

1. Chassis for a child's or doll's perambulator, comprising a wheelset in combination with two foldable scissor-like elements, wherein at one end of one of the parallel arms of the scissor-like elements a slide (6) is provided, to which a catch element is allocated, which is locatable in a catch seat in the sliding position and is releasable for folding up of the perambulator, **characterised**
- **in that** for release, in the region of each slide longitudinal bar (7, 8) a rotary element (27) rotatable about the bar longitudinal axis is provided and communicates with a tension element (21) coupled to the catch element (14), the tension element (21) being movable along the longitudinal bar (7, 8) upon rotation of the rotary element (27), thus driving the catch element (14),
- **in that** the slide (6) is shiftable and lockable in the respective end positions, release means being provided on the slide for release of the catch, comprising two slide elements (28) which are provided on the longitudinal bars (7, 8) and are slidable in the bar longitudinal direction and which are each connected to a respective further tension element (40), each of which is connected to a respective further catch element (36), and
- **in that** a slide element (28) is combined with a rotary element (27) into a common part (25), so that the part is actuatable as a rotary or slide element as required.

2. Chassis according to claim 1, **characterised in that** the rotary element (27) comprises a helix (30), on which preferably two rollers (33) connected to the tension element (21) run upon rotation of the said rotary element.

3. Chassis according to claim 2, **characterised in that** at the end of the tension element (21) extending inside the longitudinal bar (7, 8) a cross-pin (34) is provided, which penetrates an elongate perforation (35) in the longitudinal bar (7, 8) and at whose ends the rollers (33) are provided.

4. Chassis according to one of the preceding claims, **characterised in that** each catch element (14) and/or the rotary element (27) are movable against a restoring force generated by a spring element.

5. Chassis according to one of the preceding claims, **characterised in that** the rotary element (27) is formed as a rotary grip surrounding the longitudinal bar (7, 8) or comprises a rotary grip-like part (29) which cooperates with the helix (30).

6. Chassis according to claim 5, **characterised in that** the sleeve-like helix (30) penetrated by the longitudinal bar (7, 8) has male splining (31) extending in the bar longitudinal direction and **in that** on the rotary grip-like part (29) of the rotary element (27) a corresponding female splining is provided, so that when the rotary grip-like part (29) is actuated, the helix (30) may be driven via the engagement of the splines.

7. Chassis according to one of the preceding claims, **characterised in that** the angle of rotation of the rotary grip or of the rotary grip-like part (29) required to move the catch element is approximately 90°.

8. Chassis according to one of the preceding claims, **characterised in that** a locking device is allocated to each slide element, which locking device locks the slide element (28) and has to be actuated in order to move the same

9. Chassis according to claim 8, **characterised in that** the locking device comprises a release button (42), by means of which a locking pin (44) mounted inside the longitudinal bar (7, 8) may be pressed in against a restoring force generated preferably by a leaf spring (43).

10. Chassis according to one of the preceding claims, **characterised in that** the common part (25) is formed as a rotary-slide grip surrounding the longitudinal bar (7, 8).

11. Chassis according to claim 10, **characterised in that** the release button (42) is disposed on the common part (25).

12. Chassis according to one of claims 10 or 11, **characterised in that** the helix (30) has one or two wall recesses (45) for receiving the rollers (33) which are fixed during actuation of the slide element (28).

13. Chassis according to one of the preceding claims, **characterised in that** the slide (6) is disposed on the scissor arms by means of fixing struts (9, 10), at whose lower ends the longitudinal bars are pivotably mounted and which have the catch elements (14), which are detachably couplable to the tension elements (21) provided on the longitudinal bars (7, 8).

14. Chassis according to one of the preceding claims, **characterised in that** the further catch elements (36) have on each longitudinal bar (7, 8) a sliding part (37) comprising two catch claws (38) formed on opposite sides in order to lock the slide (6) in each of the end positions, which sliding part (37) is movable along the bar (7, 8) with the slide element (28) via the tension element (40) extending outside the longitudinal bar (7, 8), and **in that** in the region of the ends of the arms of the scissors (3, 4) or of the fixing struts (9, 10) corresponding catch seats (39, 46) are provided.

15. Chassis according to one of the preceding claims, **characterised in that** the further catch elements (36) are movable out of the catch position against a restoring force generated by a spring element.

## Revendications

1. Châssis pour voiture d'enfant ou voiture de poupée du type comportant un train de roulement réuni à deux ensembles de branches croisées pouvant se replier ensemble en ciseaux, à une extrémité de l'une des branches parallèles des ensembles étant disposée une rallonge coulissante (6) à laquelle est associé un élément d'arrêt qui, dans la position d'allongement, peut être immobilisée dans un organe de réception d'arrêt et qui est séparable en vue du repliement, **caractérisé en ce que**, en vue de la séparation, dans la région de chaque longeron longitudinal (7, 8) de la rallonge, il est prévu un élément rotatif (27) pouvant tourner autour de l'axe longitudinal du longeron transversal, cet élément étant réuni à un élément de traction (21) couplé à l'élément d'arrêt (14), lequel élément de traction (21) pouvant être déplacé par rotation de l'élément rotatif (27) le long du longeron longitudinal (7, 8) en emmenant avec lui l'élément d'arrêt (14), **en ce que** la rallonge coulissante (6) est réversible et immobilisable dans chacune des positions terminales, des moyens de séparation étant prévus sur la rallonge, en vue de la suppression de la réversibilité et se composant de deux éléments coulissants (28) prévus sur les deux longerons longitudinaux (7, 8) et reliés chacun à un autre élément de traction (40) dont chacun est relié à un autre élément d'arrêt (36) et **en ce que** un élément coulissant (28) est combiné avec un élément rotatif (27) en une portion commune (25) de manière telle que, selon les besoins, la portion peut être actionnée comme élément rotatif ou comme élément de rallonge.

2. Châssis selon la revendication 1, **caractérisé en ce que** l'élément rotatif (27) comprend une pièce hélicoïdale (30) sur laquelle, lors d'une rotation, se déplace un et de préférence deux galets (33) reliés à l'élément de traction (21).

3. Châssis selon la revendication 2, **caractérisé en ce que** à l'extrémité de l'élément de traction (21) se déplaçant à l'intérieur du longeron longitudinal (7, 8) est prévue une cheville transversale (34) qui traverse un trou longitudinal (35) du longeron longitudinal (7, 8) et aux extrémités de laquelle sont prévus les galets (33).

4. Châssis selon l'une quelconque des revendications précédentes, **caractérisé en ce que** chaque élément d'arrêt (14) et/ou l'élément rotatif (27) sont déplaçables à l'encontre d'une force de rappel créée par un élément élastique.

5. Châssis selon l'une quelconque des revendications précédentes, **caractérisé en ce que** l'élément rotatif (27) est constitué par une griffe rotative entourant le longeron longitudinal (7, 8) ou une pièce du genre griffe rotative (29) qui coopère avec la pièce hélicoïdale (30).

6. Châssis selon la revendication 5, **caractérisé en ce que** la pièce hélicoïdale du genre douille (30) traversée par le longeron longitudinal (7, 8) présente une denture extérieure (31) s'étendant dans la direction longitudinale du longeron et **en ce que**, sur la pièce du genre griffe rotative (29) de l'élément rotatif (27) est prévue une denture intérieure correspondante de telle sorte que, en actionnant la pièce du genre griffe rotative (29), la pièce hélicoïdale (30) peut être entraînée par l'engrènement des dentures.

7. Châssis selon l'une des revendications précédentes, **caractérisé en ce que** l'angle de rotation de la griffe rotative ou de la pièce du genre griffe rotative (29) pour le déplacement de l'élément d'arrêt est d'environ 90°.

8. Châssis selon l'une quelconque des revendications précédentes, **caractérisé en ce que**, à chaque élément coulissant, est associé un système de verrouillage qui bloque l'élément coulissant (38) et qui doit être actionné pour le déplacement de celui-ci.

9. Châssis selon la revendication 8, **caractérisé en ce que** le système de verrouillage comporte un bouton de libération (42) au moyen duquel une cheville de blocage (44) peut être enfoncée dans l'intérieur du longeron longitudinal (7, 8) à l'encontre d'une force de rappel obtenue par un ressort à lame (43).

10. Châssis selon l'une quelconque des revendications précédentes, **caractérisé en ce que** la portion commune (25) est constituée par une griffe montée coulissante et pivotante entourant le longeron longitudinal (7, 8).

11. Châssis selon la revendication 10, **caractérisé en ce que** le bouton de libération (42) est disposé sur la portion commune (25).

12. Châssis selon l'une des revendications 10 ou 11, **caractérisé en ce que** la pièce hélicoïdale (30) présente un ou deux évidements dans sa paroi pour accueillir le galet (33) lors de l'actionnement de l'élément coulissant (28).

13. Châssis selon l'une quelconque des revendications précédentes, **caractérisé en ce que** la rallonge coulissante (6) est montée sur les branches en ciseaux au moyen de traverses de fixation (9, 10) aux extrémités inférieures desquelles sont montés basculants les longerons longitudinaux et qui présentent les éléments d'arrêt (14) qui peuvent être couplés de façon séparable aux éléments de traction (21) prévus sur les longerons longitudinaux (7, 8).

14. Châssis selon l'une quelconque des revendications précédentes, **caractérisé en ce que** les autres éléments d'arrêt (36) destinés à immobiliser les rallonges coulissantes (6) dans chaque position terminale sur chaque longeron longitudinal (7, 8) présentent une portion coulissante (37) avec deux sabots d'arrêt (38) créés sur ses côtés opposés, **en ce que** l'élément de traction (40) s'étendant au-dessus de la moitié supérieure du longeron longitudinal (7, 8) peut se déplacer le long du longitudinal (7, 8) avec l'élément coulissant (28) et **en ce que** dans la région des extrémités des branches de ciseaux (3, 4) et des traverses de fixation (9, 10) sont prévues des pièces d'arrêt (39, 46).

15. Châssis selon l'une quelconque des revendications précédentes, **caractérisé en ce que** les autres éléments d'arrêt (36) sont déplaçables hors de la position d'arrêt à l'encontre d'une force de rappel crée par un élément élastique.
